# EUROPEAN PATENT APPLICATION

(11) **EP 2 918 829 A1**
(43) Date of publication of application: **16.09.2015**
(21) Application number: 15000677.3
(22) Date of filing: 09.03.2015
(51) Int. Cl.: F03D 11/00, F03D 1/06

(54) **ICE-RESISTANT PAINT FOR WIND TURBINE BLADES**

(30) Priority: 11.03.2014 ES 201400193
(71) Applicant: Gamesa Innovation & Technology, S.L., 31621 Sarriguren (ES)
(72) Inventor: Yoldi Sanguesa, Maria, 31621 Sarriguren (ES); Martinez Ortigosa, Rosario, 31621 Sarriguren (ES); Muñoz Babiano, Almudena, 28043 Madrid (ES)

(57) **Abstract**

Ice-resistant paint for wind turbine blades comprising a paint base, which in turn comprises a solvent and a hydrophobe component, which comprises nanoparticles, in which the base paint is a polyurethane high solid paint, and the nanoparticles are substantially spherical compounds comprising a silica core and a hydrophobe organosilicone coating compatible with the blade.

## Description

### FIELD OF THE INVENTION

The present invention pertains to the technical field of industrial coatings for wind turbine blades and, particularly, ice-resistant paints

### BACKGROUND OF THE INVENTION

The aerodynamic characteristics of wind turbine blades are essential to wind turbine performance. During cold seasons and in cold climates, blades are exposed to the formation of ice on their external surfaces. The accumulation of ice, particularly on the leading edge area, has negative and even substantial effects on the aerodynamic qualities of the blade, since it affects not only the energy performance of the wind turbine but also rotor structural loads by generating vibrations and imbalance in a running wind turbine, and consequently greater wear on components. Extreme ice accumulation, could even cause a forced shutdown. The significant speed and height of the iced blades likewise entails a danger as chunks of ice already formed on the blades could detach and fall at an elevated speed.

A diversity of systems have been conceived to deal with the formation of ice on wind turbine blades such as active and passive ice-resistant and de-icing systems.

One passive ice-resistant system entails coating the blades with ice-resistant paint such as a fluoroethane-based black paint to absorb thermal energy during the day and release it at night, thus heating the blade surface and contributing to the prevention of ice formation to a certain degree. However, the effectiveness of paints of this sort is extremely limited, particularly in very cold climates or on very short winter days. Hydrophobes are another type of ice-resistant paints. They block water adhesion to the blade surface and, consequently, preclude ice formation. This sort of paint, however, tends to become porous over time and loses its ice-repellent properties, and the paint thus requires reconditioning, resulting in high costs per se and because the wind turbine must shut down during the corresponding work. Moreover, an increase in hydrophobicity leads to a reduction in adhesion forces, which could result in paint adhesion issues on the blade surface.

Ice-resistant paints for wind turbine blades are described, for instance, in ES2230913T3 and GB2463675A.

### DESCRIPTION OF THE INVENTION

The purpose of the present invention is to overcome the aforementioned drawbacks in the current state of the art through an ice-resistant paint for wind turbine blades comprising a paint base, which in turn comprises a solvent and a hydrophobe component, which comprises nanoparticles, in which the base paint is a polyurethane high solid paint, and the nanoparticles are substantially spherical compounds comprising a silica core and a hydrophobe organosilicone coating compatible with the blade.

In one preferential embodiment of the invention, the silica core of the nanoparticles comprises a silica fume. In turn, the base paint is a polyurethane resin paint.

Preferentially, the compound nanoparticles are present in the base paint as dispersion. The ice-resistant paint can comprise a dispersant in non-polar systems to facilitate the formation of the dispersion

In one embodiment of the invention, the solvent is an organic solvent of average polarity.

Comparative tests conducted with the ice-resistant paint of the invention and a conventional paint employed on wind turbines concluded that the ice-resistant paint of the present invention presents the same properties of color, opacity, gloss, adhesion, abrasion, oxidation and delamination as conventional paint, with substantially improved resistance to erosion from rain and ice-resistance properties.

The invention also refers to the use of paint previously described as coating for wind turbine blades, and to a wind turbine blade comprising an external surface coated with ice-resistant paint described above.

### MODES OF CARRYING OUT THE INVENTION

### Example 1:

A solvent composition was prepared by mixing, through magnetic agitation, an average polarity organic solvent with a dispersant.

Silica fume core nanoparticle additives coated with an organosilicone compound were added to the solvent composition and both components were mixed by mechanical agitation to obtain a dispersion of nanoparticles.

The dispersion of nanoparticles was mixed by mechanical agitation with a standard base paint and hardener agent, yielding an ice-resistant paint according to the invention.

### Example 2:

The ice-resistant paint and the standard paint were applied to respective laminates of conventional material employed on wind turbine blades, and then tested to ascertain their properties of color, opacity, gloss, adhesion, abrasion, oxidation, cracking and delamination, resistance to rain erosion and ice-resistant properties. The following table lists the results of the tests:

| **Requirement** | | **Test method** | **Standard painting** | **Ice-resistant paint** | **Comparison** |
|---|---|---|---|---|---|
| **Property** | **Category** | | | | |
| Color | Physical properties Cured coating | ISO 7224 (<1.5) | ΔE = 0.38 | ΔE=0.48 | OK |
| Opacity | | ISO 2814 | 150 µm | 150 µm | OK |
| Gloss | | ISO 2813 (<30) | 4.62 GU | 3.86 GU | OK |
| Adhesion | Physical-chemical properties | ISO 4624 (>5) | 7.13 MPa | 6.93 MPa | OK |
| Rain erosion test | | SAAB test | PASS | PASS | Much better. Strength more than doubled |
| Erosion testing | | ASTM G76 | 0.04 g/ 300 s | 0.04 g/ 300 s | OK |
| Abrasion | | ISO 4628-2 | 0 s (0) | 0 s (0) | OK |
| Oxidation | | ISO 4628-3 | Ri 0 | Ri 0 | OK |
| Cracking | | ISO 4628-4 | 0 s (0) | 0 s (0) | OK |
| Delamination | | ISO 4628-5 | 0 s (0) | 0 s (0) | OK |
| ANTI-ICING EFFECT | Functional properties | WCA | WCA 102º | WCA 102.4º | Better |
| | | Water evacuation | Water retention: 0.053 | Water retention: 0.019 | BETTER 65% increase in water evacuation |
| | | Freezer tunnel | -10ºC ice adhered | -10ºC no ice adhered | Much better |

## Claims

1. Ice-resistant paint for wind turbine blades comprising a paint base, which in turn comprises a solvent and a hydrophobe component, which comprises nanoparticles, **characterized in that** the base paint is a polyurethane high solid paint and **in that** the nanoparticles are substantially spherical compounds comprising a silica core and a hydrophobe organosilicone coating compatible with the blade.

2. Ice-resistant paint according to claim 1, **characterized in that** the silica core comprises silica fume.

3. Ice-resistant paint according to claims 1 or 2, **characterized in that** the base paint is a polyurethane resin paint

4. Ice-resistant paint according to claims 1, 2 or 3, **characterized in that** the paint comprises a dispersant in non-polar systems.

5. Ice-resistant paint according to claims 1-4, **characterized in that** the compound nanoparticles are present in the base paint in the form of dispersion.

6. Ice-resistant paint according to claims 1- 5, **characterized in that** the solvent is an organic solvent of average polarity.

7. Use of the ice-resistant paint defined in any of the claims 1-6 as coating for wind turbine blades.

8. Blade of a wind turbine, which comprises an external surface, **characterized in that** at least one part of the external surface is coated by ice-resistant paint defined in any of the claims 1-6.
